Europäisches Patentamt

European Patent Office

Office européen des brevets

(19)

(11) Veröffentlichungsnummer : **0 143 446**
**B1**

(12) **EUROPÄISCHE PATENTSCHRIFT**

(45) Veröffentlichungstag der Patentschrift :
01.02.89

(21) Anmeldenummer : 84114167.4

(22) Anmeldetag : 23.11.84

(51) Int. Cl.⁴ : **H 05 H   1/22,** H 01 J 35/00,
**H 01 S   4/00**

(54) Einrichtung zum Erzeugen von kurzdauernden, intensiven Impulsen elektromagnetischer Strahlung im Wellenlängenbereich unter etwa 100 nm.

(30) Priorität : 24.11.83 DE 3342531

(43) Veröffentlichungstag der Anmeldung :
05.06.85 Patentblatt 85/23

(45) Bekanntmachung des Hinweises auf die Patenterteilung : 01.02.89 Patentblatt 89/05

(84) Benannte Vertragsstaaten :
AT BE CH DE FR GB IT LI LU NL SE

(56) Entgegenhaltungen :
US—A— 3 823 325
APPLIED PHYSICS LETTERS, Band 43, Nr. 3, 1. August 1983, Seiten 228-230, American Institute of Physics, New York, US; B. NIKOLAUS et al.: "90-fs tunable optical pulses obtained by two-stage pulse compression"
APPLIED OPTICS, Band 22, Nr. 21, 1. November 1983, Seiten 3327-3330, Society of America, New York, US; Z. BOR et al.: "Generation of 6-psec pulses with a nitrogen-laser-pumped distributed-feedback dye laser"
OPTICS COMMUNICATIONS, Band 25, Nr. 2, Mai 1978, Seiten 215-220, Amsterdam, NL; R. MAVADDAT: "Development of optically excited soft X-ray laser techniques: a travelling wave lens"
JOURNAL OF THE OPTICAL SOCIETY OF AMERICA, Band 44, Nr. 8, August 1954, Seiten 592-597, New York, US; J.H. McLEOD: "The axicon: a new type of optical element"

(73) Patentinhaber : Max-Planck-Gesellschaft zur Förderung der Wissenschaften e.V.
Bunsenstrasse 10
D-3400 Göttingen (DE)

(72) Erfinder : Schäfer, Fritz Peter, Prof. Dr. Dipl.-Phys.
Senderstrasse 53
D-3400 Göttingen-Nikolausberg (DE)

(74) Vertreter : von Bezold, Dieter, Dr. et al
Dr. Dieter von Bezold Dipl.-Ing. Peter Schütz Dipl.-Ing. Wolfgang Heusler Brienner Strasse 52
D-8000 München 2 (DE)

## Beschreibung

Die vorliegende Erfindung betrifft Einrichtungen zum Erzeugen von elektromagnetischen Strahlungsimpulsen hoher Intensität und Strahlungsdichte im Wellenlängenbereich unter 100 Nanometer (10 Å).

Für viele, ganz unterschiedliche Anwendungen in der physikalischen, chemischen und biologischen Grundlagenforschung ebenso wie in Medizin und Technik ist es außerordentlich wünschenswert, eine Röntgenlichtquelle zur Verfügung zu haben, die möglichst punktförmig ist, eine hohe Brillanz hat und möglichst kurze Blitze aussendet. Wenn hier von Röntgenlicht die Rede ist, so soll dabei auch das Gebiet des Vakuum-Ultravioletts (VUV) mit einbezogen werden, da der Übergang vom harten oder Vakuum-Ultraviolett zum weichen Röntgen-Gebiet des elektromagnetischen Spektralbereiches fließend ist und keine allgemein akzeptierte Konvention über eine Abgrenzung zwischen diesen beiden Gebieten besteht, was auch aus physikalischer Sicht wenig sinnvoll wäre, da die üblichen bekannten Verfahren zur Erzeugung solcher elektromagnetischer Strahlung im ganzen Wellenlängenbereich von oberhalb 100 nm bis etwa 0,01 nm (1 000 Å bis 0,1 Å) verwendet werden können.

Seit etwa fünfzehn Jahren sind weltweit viele Arbeitsgruppen darum bemüht, eine solche Röntgen-Blitzlichtquelle u. a. in Form eines laserinduzierten Plasmas zu entwickeln. Ein solches Plasma entsteht im Fokus eines leistungsstarken gepulsten Lasers, wenn sich im Fokalbereich feste oder gasförmige Substanz ausreichender Dichte befindet. Bei Leistungsdichten im Fokalbereich von etwa $10^{13}$ W/cm$^2$ und darüber wurde Röntgen-Emission aus diesem Plasma beobachtet. Insbesondere zielten viele Bemühungen darauf ab, nicht nur eine spontan emittierende Röntgen-Lichtquelle zu bekommen, sondern möglichst eine kohärente oder teilkohärente Lichtquelle, d. h. einen Röntgen-Laser. Dabei ergab sich sehr bald darin Übereinstimmung, daß es wohl außerordentlich schwierig, wenn nicht gar unmöglich sein würde, einen Laser im eigentlichen Sinne, d. h. mit der strahlenden Materie im Inneren eines Resonators, aus dem dann der Laserstrahl ausgekoppelt wird, zu erzeugen, da im Röntgen-Gebiet keine Spiegel mit hinreichender Reflexion bekannt sind, um einen ausreichend verlustarmen Resonator aufbauen zu können. Als einzige Alternative wurde die Möglichkeit erkannt, in einem langgestreckten invertierten Medium die am einen Ende erzeugte spontane Emission längs der Achse des Mediums durch stimulierte Emission zu verstärken. Die dann am anderen Ende entstehende starke teilweise kohärente Strahlung wird auch im Deutschen allgemein als ASE bezeichnet nach den Anfangsbuchstaben von Amplified Spontaneous Emission.

Aus US-A-3,823,325 ist eine Einrichtung zum Erzeugen von elektromagnetischer Strahlung im VUV- und Röntgengebiet bekannt, welche einen Laser, einen Phasenverzögerungsoptik aus einer Korrekturplatte und einer Linse sowie ein fadenförmiges Target enthält, die in der angegebenen Reihenfolge längs einer optischen Achse angeordnet sind. Die Dauer der Laserstrahlungsimpulse soll höchstens $10^{-11}$ Sekunden, vorzugsweise weniger als $10^{-12}$ Sekunden betragen und das Target soll einen Durchmesser von höchstens 1 μm haben, vorzugsweise hohl sein und aus einem Material mit einer Kernladungszahl zwischen etwa 2 und 30 bestehen.

Aus OPTICS COMMUNICATIONS, 25, Nr. 2, Mai 1978, S. 215-220 ist eine ähnliche Einrichtung bekannt, bei der jedoch zwischen dem Laser und dem Target eine asphärische Linse angeordnet ist, die im Querschnitt eine Form ähnlich einer flachen Glockenkurve hat.

Bei diesen beiden bekannten Einrichtungen soll ein das Targetmaterial blitzartig erhitzender Laserstrahlungspuls erzeugt werden, der mit der Gruppengeschwindigkeit der entstehenden VUV- oder Röntgenstrahlung längs des Targets wandert.

Ein mit einem Stickstofflaser gepumpter, mit verteilter Rückkopplung arbeitender Farbstofflaser zum Erzeugen von Strahlungsimpulsen mit einer Dauer im Pikosekundenbereich ist aus Applied Optics 22, Nr. 21, 1. November 1983, S. 3327 bis 3330 bekannt. Die Verkürzung von Laserstrahlungsimpulsen durch mehrstufige Impulskompression ist aus Appl. Phys. Lett. 43, Nr. 3, 1. August 1983, S. 228 bis 230 bekannt.

Die vorliegende Erfindung löst die Aufgabe, eine Einrichtung zum Erzeugen eines heißen Plasmas, das elektromagnetische Strahlung im Wellenlängenbereich unter etwa 100 nm emittiert, mit einem Laser, der Strahlungsimpulse mit einer Dauer unter einer Pikosekunde emittiert und mit einer Fokussierungsoptik zum Fokussieren der Strahlungsimpulse in ein ein Targetmaterial enthaltendes Volumen zu vereinfachen und die Einkopplung der Laserstrahlungsenergie in das Targetmaterial bei einer solchen Einrichtung zu verbessern, dadurch, daß die Fokussierungsoptik mindestens ein Axicon-Element enthält.

Axicons sind zwar schon seit längerem aus J. Opt. Soc. Am. 44, Nr. 8, August 1954, S. 592-597 bekannt. In dieser Veröffentlichung werden jedoch nur die geometrisch-optischen Abbildungseigenschaften von Axicons diskutiert und als Anwendungen nur Teleskope und Autokollimatoren genannt.

Weiterbildungen und vorteilhafte Ausgestaltungen der erfindungsgemäßen Einrichtung sind Gegenstand von Unteransprüchen.

Durch die Verwendung einer Axicon-Optik läßt sich mit einfachen Mitteln eine zumindest teilweise kohärente VUV- und Röntgen-Strahlung durch Wanderwellenanregung des Plasmas erzielen.

Durch die vorliegende Einrichtung lassen sich mit wesentlich geringeren Laserenergien als bisher und/oder mit wesentlich besserem Wirkungs-

grad sehr kurze elektromagnetische Strahlungs-impulse mit hoher Leuchtdichte und Wellenlängen im Vakuumultraviolett und Röntgengebiet, also im Bereich von etwa $10^2$ nm bis etwa $10^{-2}$ nm erzeugen.

Im folgenden werden Ausführungsbeispiele der Erfindung unter Bezugnahme auf die Zeichnungen näher erläutert. Es zeigen :

Fig. 1 eine bevorzugte Ausführungsform der vorliegenden Einrichtung ;

Fig. 2 eine vergrößerte Teilansicht von Fig. 1 und

Fig. 3 bis 5 schematische Darstellungen von weiteren Axicon-Fokussierungsoptiken, die bei der erfindungsgemäßen Einrichtung verwendet werden können.

Die Einrichtungen gemäß der Erfindung enthalten generell einen Laser, der kurzwellige Impulse mit einer Impulsdauer unter 1 Pikosekunde, vor-zugsweise unter 0,5 ps oder noch besser unter 200 Femtosekunden liefert. Wichtig ist, daß in einem Zeitraum, der unter 1 Pikosekunde liegt, die ganze Energie, die für die gewünschte Aufheizung des Plasmas bzw. die Röntgenlichtemission erforderlich ist, in das Targetvolumen, auf das der Laser fokussiert ist, eingekoppelt wird.

Die Anstiegsgeschwindigkeit der Laserimpulse soll vorteilhafterweise in der Größenordnung von 100 Femtosekunden und darunter liegen. Es soll insbesondere dadurch erreicht werden, daß die Geschwindigkeit der Zuführung der Laserstrahlungsenergie in das Targetvolumen wenigstens annähernd gleich der Verlustrate des Plasmas durch Abstrahlung und dergleichen wird. Die Impulsenergie liegt zweckmäßigerweise wesentlich unter 1 Joule, so daß mit einem kleinen Bündeldurchmesser und einer entsprechend klein bemessenen und daher optimal korrigierbaren Fokussierungsoptik gearbeitet werden kann.

Als Laser können beispielsweise Excimer-Laser verwendet werden, wie sie in GB-A-21 40 611 beschrieben sind. Am zweckmäßigsten wird ein mit kurzen Laserstrahlungsimpulsen gepumpter DFB-Laser (mit verteilter Rückkopplung arbeitender Laser) gemäß der GB-A-21 40 611 verwendet, dem noch ein Impulskompressor nachgeschaltet ist. Als Impulskompressor kann beispielsweise eine Einrichtung verwendet werden, wie sie von Nikolaus und Grischkowsky in « Appl. Phys. Lett. 43, S. 228, 1983 » beschrieben ist.

Mit einem Laser der letztgenannten Art läßt sich nach Frequenzverdopplung und Verstärkung im XeCl-Laser eine Impulshalbwertsdauer von etwa 150 fs erreichen, wobei die Impulsenergie 10 mJ und die Laserwellenlänge 308 nm beträgt. Fokussiert man die Strahlung eines solchen Lasers auf Materie, so entsteht ein Plasma, das Elektronen enthält, die eine Energie bis zu 10 keV haben können (sogenannte suprathermale Elektronen). Die Geschwindigkeit eines Elektrons mit 10 keV Energie beträgt gerade 19 % der Lichtgeschwin-digkeit, namlich $5,7 \times 10^9$ cm/s. Diese Elektronen können somit in 150 fs höchstens einen Weg von 8,6 μm zurücklegen. Wird als Target (so wird die zur Erzeugung des Plasmas bestrahlte Materie üblicherweise bezeichnet) z. B. ein Zylinder von etwa 5 μm Durchmesser und einigen Millimetern Länge benutzt, so wird das Plasma ein Volumen einnehmen, das mit Sicherheit weniger als das Zehnfache des ursprünglichen Targetvolumens beträgt.

Mit den kurzen Impuls-Halbwertsduaern läß sich eine Röntgen-Emission schon bei weniger als $10^{10}$ W/cm$^2$ erreichen. Selbstverständlich ist die Erfindung nicht auf solche niedrigen Leistungsdichten beschränkt. Die mit dem oben erwähnten Laser erzielbare Leistungsdichte ist in der Praxis nämlich wesentlich höher. Wird die Impulsenergie von 10 mJ in 150 fs auf die Oberfläche eines zylinderförmigen Targets von 5 μm Durchmesser und 2 mm Länge fokussiert, so erhält man auf der Oberfläche des Targets eine Leistungsdichte von rund $2 \times 10^{14}$ W/cm$^2$ und damit eine entsprechend höhere Brillanz.

Ein weiterer wesentlicher Vorteil, der durch die Verwendung von Laserimpulsen der erwähnten kurzen Dauer von z. B. 150 fs erreicht wird, besteht in einer Angleichung der Anregungsdauer an die Anklingzeit eines angeregten Zustandes in den inneren Schalen.

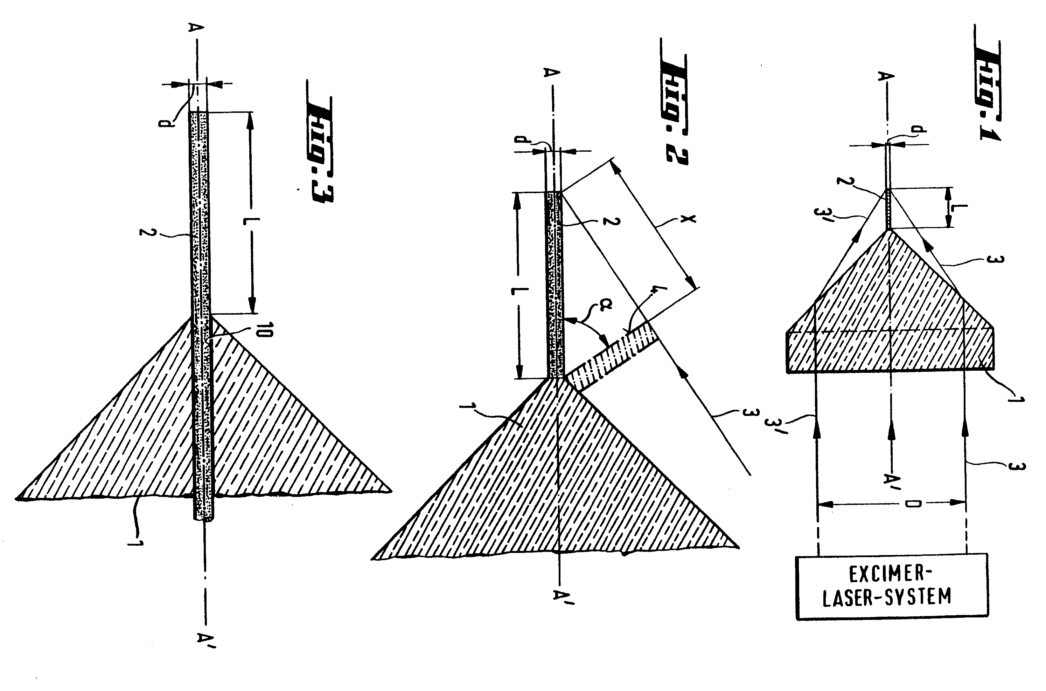

Ein wesentliches Merkmal von bevorzugten Ausführungsformen der Erfindung ist die Fokussierung des Laserstrahls auf ein linienhaftes Target durch eine Axicons enthaltende oder nur aus Axicons bestehende Optik. Als Axicons bezeichnet man die Klasse der optischen Elemente, die einen Punkt auf der optischen Achse in eine Linie auf der optischen Achse transformieren und umgekehrt (J. H. McLeod, J. Opt. Soc. Am., 44, 592, 1954, und ibid. 50, 166, 1960). Die grundsätzliche Anordnung ist in Fig. 1 dargestellt. Sie besteht im wesentlichen aus einem für den zu fokussierenden Laserstrahl nicht absorbierenden optischen Material (z. B. Quarzglas) in der Form eines Kegels 1 mit einem zylindrischen Ansatz zur besseren Halterung und Zentrierung. Die Achse des Kegels bzw. Zylinders fällt mit der optischen Achse A-A' zusammen. Die ebene Grundfläche, die genau senkrecht auf der optischen Achse steht, und die Mantelfläche des Kegels sind optisch bearbeitete Flächen, deren Abweichungen von den Idealflächen im Rahmen des technisch Möglichen minimal sind. Fällt nun auf die Grundfläche ein zur optischen Achse kollinearer Laserstrahl mit dem Durchmesser D, von dem die Randstrahlen 3 und 3' in der Schnittzeichnung Fig. 1 dargestellt sind, so wird dieser Strahl nach den Gesetzen der geometrischen Optik, wie man leicht erkennt, beim Durchtritt durch die Mantelfläche des Kegels so zur optischen Achse hin gebrochen, daß seine sämtlichen Teilstrahlen die optische Achse zwischen der Spitze des Kegels und einem Punkt im Abstand von L davon passieren müssen. Dieser Bereich der optischen Achse von der Länge L, die nach den Gesetzen der geometrischen Optik einfach auszurechnen ist, wird nun mit dem zu bestrahlenden Target 2 in Fig. 1 ausgefüllt, das einen Durchmesser d und eben die Länge L haben soll. Während die optische Strahlungsleistung des Lasers im einfallenden Strahl auf eine Fläche $\pi D^2/4$ verteilt war, wird sie nach dem Durchgang durch das Axicon 1 auf die Mantelfläche des Targets, d. h. auf eine Fläche der Größe $L \pi d$ konzentriert. Es ergibt sich somit eine Erhöhung der Bestrahlungsstärke um den Faktor $F = D^2/4 dL$. Für den beispielsweisen Fall eines Excimer-Lasers der oben erwähnten Art ist $D = 20$ mm, $d = 5 \cdot 10^{-3}$ mm und $L = 2$ mm. Daraus ergibt sich $F = 10^4$. Es ist sofort ersichtlich, daß L in weiten Grenzen variierbar ist durch die Wahl des Kegelwinkels und daß L gegen Null strebt, wenn der Kegelwinkel so gewählt wird, daß der Einfallswinkel des Laserstrahls auf die innere Kegelmantelfläche sich dem Grenzwinkel der Totalreflexion für das verwandte Material annähert.

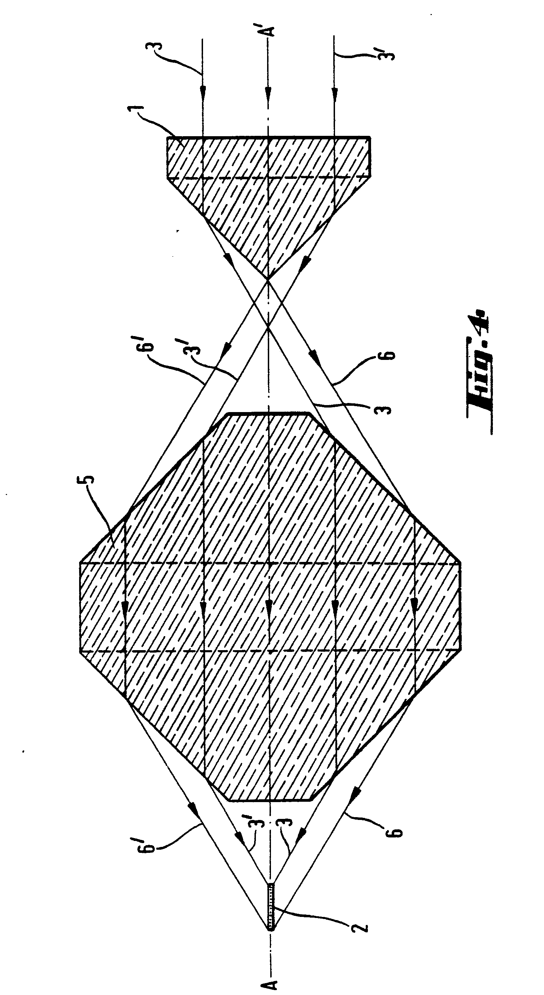

Durch die Verwendung eines Axicons als fokussierendes optisches Element ergibt sich überraschenderweise ein weiterer wichtiger Vorteil, nämlich eine Wanderwellenanregung mit einfachen Mitteln zu erreichen. Dies sei anhand von Fig. 2 näher erläutert, in der der Bereich des Targets 2 aus Fig. 1 vergrößert wiedergegeben ist und in der der schraffiert gezeichnete Bereich, der von der elektromagnetischen Welle des Laserimpulses ausgefüllt wird, mit seiner Wellenfront 4 in einem Zeitpunkt dargestellt ist, in dem Wellenfront gerade die Spitze des Axicon-Kegels 1 verläßt und auf das an der Spitze des Kegels 1 gelegene Ende des Targets 2 trifft. Die Wellenfront 4 bildet mit der Längsachse des Targets 2 einen Winkel $\alpha$, dessen Größe sich durch eine elementare Rechnung herleiten läßt. Man sieht sofort, daß der geometrische Ort, an dem sich die fortschreitende Wellenfront mit der Targetoberfläche überschneidet, vom rechten Ende des Targets zum linken Ende des Targets in einer zeit durchläuft, während der die Wellenfront um eine Strecke x, die in der Figur am Randstrahl 3 eingezeichnet ist, fortschreitet. Da die Strecke x immer kleiner ist als die Strecke L, sieht man sofort, daß sich die Anregung im Targetmaterial mit einer größeren Geschwindigkeit fortpflanzt als die Wellenfront. Da der Brechungsindex fast aller Substanzen im Röntgengebiet kleiner als eins ist und damit die Phasengeschwindigkeit des Röntgenlichts größer als die Lichtgeschwindigkeit, so kann durch geeignete Wahl des Winkels $\alpha$ (der wiederum durch den Kegelwinkel und den Brechungsindex des Axicons 1 festgelegt wird) die Fortpflanzungsgeschwindigkeit der Anregung im Targetmaterial gerade gleich der Phasengeschwindigkeit des Röntgenlichts der gewünschten Wellenlänge in diesem Material gewählt werden. Auf diese Art und Weise entsteht eine von rechts nach links in Fig. 2 fortschreitende, durch stimulierte Emission ständig verstärkte Röntgenlichtwelle, während in alle anderen Raumrichtungen, insbesondere nach rechts in Fig. 2, nur ein relativ unerheblicher Anteil der Gesamtemission abgestrahlt wird. Diese Anordnung stellt somit einen ASE-Laser dar, der je nach Wahl des Targetmaterials und der Pumpbedingungen im gesamten oben angegebenen Bereich von etwa 100 nm bis 10 pm (1 000 Å bis 0,1 Å) arbeiten kann.

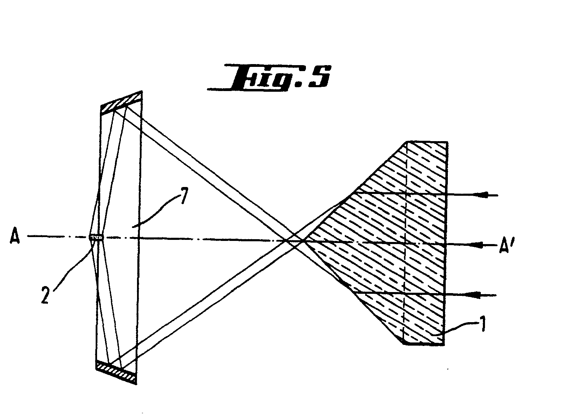

Eine vorteilhafte technische Lösung der Aufgabe, das Target genau zentriert in der richtigen Position zu haltern und nach der Verdampfung durch ein neues Target in einer bequemen und automatisierbaren Art und Weise zu ersetzen, ist in Fig. 3 dargestellt. Wie dort skizziert, wird dafür das Axicon 1 so ausgeführt, daß es einen zur Achse koaxialen zylindrischen Kanal bzw. eine zylindrische Bohrung 10 enthält, die nur wenige Mikrometer im Durchmesser größer ist als das zu bestrahlende Target 2. Letzteres wird von der Grundfläche des Axicons aus durch die ganze Bohrung hindurchgeführt, bis es gerade um eine Länge L, die als Targetlänge benötigt wird, über die Spitze des Axicons hinausragt. Nach Verdampfen des bestrahlten Targetmaterials wird von hinten wieder so viel Material, z. B. durch mechanische Vorrichtungen oder durch Anwendung von Druck, nachgeschoben, bis wiederum die benötigte Länge über die Spitze des Axicons hinausragt. Es ist bemerkenswert, daß auf diese einfache Art und Weise das Target stets genau zentriert ist und auch eine gute mechanische Halterung besitzt. Es ist besonders hervorzuheben, daß durch diese Art der Zufuhr des Targetmaterials in den Bestrahlungsraum auch gasförmige Targets benutzt werden können, indem man rechtzeitig vor Auslösen des Laserblitzes mit entsprechend hohem Druck einen Gasstrom durch die Bohrung schickt, so daß sich eine ausreichende Länge über die Spitze des Axicons hinaus ein Gasstrahl von ausreichender Dichte ausbildet. Als solche gasförmige Targets können vielerlei Gase, Dämpfe und Mischungen von solchen dienen, u. a. auch $UF_6$, HD, HT, Ni $(CO)_4$ usw.

Eine weitere Ausführungsform der Fokussieroptik, bei der das Target 2 in beliebiger Entfernung vom letzten Fokussierelement angeordnet werden kann, ist in Fig. 4 dargestellt. Hierbei handelt es sich, wie bei den vorhergehenden Figuren, um einen Radialschnitt einer rotationssymmetrischen Anordnung mit der optischen Achse A-A' als Rotationsachse. Als erstes optisches Element ist wieder ein kegelförmiges Axicon 1 wie in Fig. 1 angeordnet, jedoch befindet sich in seiner Fokussierlinie keine Materie und der Laserstrahl spaltet sich nach Verlassen des Fokalbereiches in ein ringförmiges Lichtbündel auf, dessen Randstrahlen in der Schnittzeichnung gemäß Fig. 4 mit 6 und 6' bezeichnet sind. Dieses Ringbündel tritt nun in ein weiteres Axicon 5 ein, das als Döppelkegel ausgebildet ist. Bei der beispielhaften Ausführung gemäß Fig. 4 ist es ein auf beiden Seiten abgeschnittener Doppelkegelstumpf mit gleichen Kegelwinkeln für die beiden Hälften des Axicons. Es ist ohne weitere Begründung sofort ersichtlich, daß auch verschiedene Kegelwinkel, die auch nicht mit dem Kegelwinkel des Axicons 1 übereinstimmen müssen, gewählt werden können und daß Materialien verschiedener Brechungsindices benutzt werden können und daß schließlich die Dimensionen des Axicon 5, wie aus der Figur leicht ersichtlich, von dem Abstand zwischen den beiden Axicons einerseits und dem Abstand zwi-

schen dem Axicon 5 und dem Target 2 im Fokussierbereich des zweiten Axicons bestimmt werden. Wie aus Figur 4 zu sehen ist, befindet sich jetzt der Fokussierbereich, in dem das Target angeordnet wird, in einem von allen Seiten frei zugänglichen Raum, was für manche Anwendungen von Bedeutung sein kann. Es bedarf wohl keines besonderen Hinweises, daß der Raum zwischen den beiden Axicons 1 und 5 evakuiert sein muß, damit im Fokalbereich des Axicons 1 kein Plasma entsteht, das die Laserenergie hier bereits absorbieren würde, statt sie zum Target 2 weiterzuleiten.

In den Anordnungen der Figuren 1-4 wurde nur reine Refraktionsoptik benutzt. Selbstverständlich können auch reflektierende Axicons benutzt werden oder gemischte Systeme, die teil mit Refraktion teils mit Reflexion arbeiten. Figur 5 zeigt ein solches Ausführungsbeispiel. Eingangs wird wieder ein kegelförmiges Axicon 1 wie in Fig. 1 in Transmission benutzt und dann ein Axicon 7, das die Form eines innen verspiegelten Hohlkegelabschnitts hat und, wie in Fig. 5 skizziert, das ringförmige Laserbündel auf das Target 2 fokussiert. Durch die Wahl des Kegelwinkels und des Brechungsindex des Axicons 1 wird die Länge von dessen Fokalbereich festgelegt. Da die Ringbreite des Ringlaserbündels durch die Reflexion am Axicon 7 nicht verändert wird, kann die Länge des Fokalbereichs des Axicons 7 nie den Wert der Länge des Fokalbereichs des Axicons 1 unterschreiten, sondern höchstens größer werden, wenn nämlich die vom Axicon 7 reflektierten Strahlen des Ringbündels nicht senkrecht auf der optischen Achse stehen. Durch die Wahl des Kegelwinkels des Axicons 7 läßt sich der Winkel zwischen der Wellenfront und der optischen Achse auf den gewünschten Wert einstellen. Wie man sieht, bekommt man durch die Verwendung eines Refraktions- und eines Reflexionsaxicons eine größere Freiheit zur Anpassung der Länge des Fokalbereichs an die Targetlänge und den gewünschten Winkel zwischen Wellenfront und optischer Achse zur Erzielung der Wanderwellenanregung.

Durch Abweichungen von reinen Kegelflächen, wobei immer jedoch die Rotationssymmetrie eingehalten werden sollte, lassen sich nötigenfalls weitere Verbesserungen erreichen, wie z. B. eine Ortsabhängigkeit der Fortpflanzungsgeschwindigkeit der Anregung im Target durch eine gekrümmte Wellenfront und/oder eine Ortsabhängigkeit der fokussierten Leistungsdichte auf der Targetoberfläche.

Der Fachmann kann durch die Verwendung von zwei oder mehreren Axicons, gegebenenfalls in Kombination mit weiteren optischen Elementen, die Fokussierungseinrichtung nicht nur den oben ausführlich dargelegten physikalischen Bedingungen anpassen, sondern auch in weiten Grenzen sonstige vorgegebene Rahmenbedingungen, wie z. B. größte Abmessungen, höchstes erlaubtes Gewicht oder nicht zu überschreitende Herstellungskosten einhalten, ohne den Rahmen der Erfindung zu verlassen.

**Patentansprüche**

1. Einrichtung zum Erzeugen eines heißen Plasmas, das elektromagnetische Strahlung im Wellenlängenbereich unter etwa 100 nm emittiert, mit einem Laser, der Strahlungsimpulse mit einer Dauer unter einer Pikosekunde emittiert, und mit einer Fokussierungsoptik zum Fokussieren der Strahlungsimpulse in ein ein Targetmaterial enthaltendes Volumen, dadurch gekennzeichnet, daß die Fokussierungsoptik mindestens ein Axicon-Element (1, 5) enthält.

2. Einrichtung nach Anspruch 1, dadurch gekennzeichnet, daß der Laser Strahlungsimpulse mit einer Dauer unter 0,5 ps liefert.

3. Einrichtung nach Anspruch 1, dadurch gekennzeichnet, daß der Laser Strahlungsimpulse mit einer Dauer unter 200 Femtosekunden liefert.

4. Einrichtung nach Anspruch 1, 2 oder 3, dadurch gekennzeichnet, daß der Laser UV-Laser ist, welcher einen mit einem kurzen Laserstrahlungsimpuls gepumpten DFB-Laser und mindestens einen nachgeschalteten Impulskompressor enthält.

5. Einrichtung nach einem der Ansprüche 1 bis 4, dadurch gekennzeichnet, daß die Fokussierungsoptik ein Reflexions-Axicon-Element (7) enthält.

6. Einrichtung nach einem der Ansprüche 1 bis 4, dadurch gekennzeichnet, daß die Fokussierungsoptik ein Refraktions-Axicon-Element (1) mit einer axialen Bohrung (10) zum Zuführen des Targetmaterials enthält.

7. Einrichtung nach Anspruch 6, dadurch gekennzeichnet, daß die Fokussierungsoptik ein kegelförmiges Axicon (11) und ein im Strahlengang hinter diesem angeordnetes zweites Axicon (5) in Form eines Doppelkegelstumpfes enthält.

8. Einrichtung nach einem der Ansprüche 1 bis 7 mit stabförmigem Targetmaterial (2), dadurch gekennzeichnet, daß die Parameter der Axicon-Fokussierungsoptik so bemessen sind, daß sich die Wellenfront der aus der Axicon-Fokussierungsoptik austretenden Laserstrahlung längs des in der optischen Achse (A-A') der Axicon-Fokussierungsoptik angeordneten stabförmigen Targetmaterials (2) mit einer Geschwindigkeit ausbreitet, die wenigstens annähernd gleich der Ausbreitungsgeschwindigkeit der Röntgenstrahlung im Targetmaterialvolumen ist.

**Claims**

1. Device for generating a hot plasma, which emits electromagnetic radiation in the wavelength region below about 100 nm, with a laser, which emits pulses of radiation having a duration less than a picosecond, and with a focusing optics for focusing the pulses of radiation into a volume containing a target material, characterized in that the focusing optics comprises at least one axicon element (1, 5).

2. Device according to claim 1, characterized in that the laser supplies pulses of radiation with a duration below 0.5 ps.

3. Device according to claim 1, characterized in that the laser supplies pulses of radiation with a duration below 200 femtosecond.

4. Device according to claim 1, 2 or 3, characterized in that the laser is a UV laser, which comprises a DFB laser pumped with a short laser radiation pulse and at least one following pulse compressor.

5. Device according to one of claims 1 to 4, characterized in that the focusing optics comprises a reflection axicon element (7).

6. Device according to one of claims 1 to 4, characterized in that the focusing optics comprise a refraction axicon element (1) with an axial bore (10) for the feed of the target material.

7. Device according to claim 6, characterized in that the focusing optics comprise a conical axicon (1) and a second axicon (5) in the form of a double frustum arranged relative to the input beam behind the first axicon.

8. Device according to one of claims 1 to 7 with rod-formed target material, characterized in that the parameters of the axicon focusing optics are so determined that they propagate the wavefront of the laser beam emerging from the axicon focusing optics along the rod-formed target material (2) arranged in the optic axis (A-A') of the axicon focusing optics with a velocity which is at least approximately equal to the velocity of propagation of the X-radiation in the target material volume.

**Revendications**

1. Dispositif pour produire un plasma chaud qui émet un rayonnement électromagnétique dans la gamme de longueurs d'onde inférieure à environ 100 nm, comportant un laser qui émet des impulsions de rayonnement d'une durée inférieure à une picoseconde, et comportant un système optique de focalisation pour focaliser les impulsions de rayonnement dans un volume contenant une matière-cible, caractérisé en ce que le système optique de focalisation comprend un axicone.

2. Dispositif selon la revendication 1, caractérisé en ce que le laser produit des impulsions de rayonnement d'une durée inférieure à 0,5 ps.

3. Dispositif selon la revendication 1, caractérisé en ce que le laser produit des impulsions de rayonnement d'une durée inférieure à 200 femtosecondes.

4. Dispositif selon la revendication 1, 2 ou 3, caractérisé en ce que le laser est un laser UV qui comprend un laser DFB pompé avec une courte impulsion de rayonnement laser et au moins un compresseur d'impulsions montés en aval.

5. Dispositif selon l'une des revendications 1 à 4, caractérisé en ce que le système optique de focalisation comprend un élément axicone à réflexion (7).

6. Dispositif selon l'une des revendications 1 à 4, caractérisé en ce que le système optique de focalisation comprend un élément axicone à réfraction (1) comportant un alésage axial (10) pour l'amenée de la matière-cible.

7. Dispositif selon la revendication 6, caractérisé en ce que le système optique de focalisation est un axicone conique (11) et comprend un second axicone (5), en forme de double tronc de cône, placé après celui-ci sur le trajet des rayons.

8. Dispositif selon l'une des revendications 1 à 7, comportant une matière-cible en forme de barreau (2), caractérisé en ce que les paramètres du système optique de focalisation à axicones sont calculés de façon que le front d'onde du rayonnement laser sortant du système optique de focalisation à axicones se propage le long de la matière-cible en forme de barreau (2) placée sur l'axe optique (A-A') du système optique de focalisation à axicones à une vitesse qui est au moins approximativement égale à la vitesse de propagation des rayons X dans le volume de matière-cible.

**Fig: 1**

EXCIMER-
LASER-SYSTEM

**Fig: 2**

**Fig: 3**

1

Fig. 4

Fig. 5